# EUROPEAN PATENT APPLICATION

(11) **EP 4 589 279 A1**
(43) Date of publication of application: **23.07.2025**
(21) Application number: 23865221.8
(22) Date of filing: 24.08.2023
(51) Int. Cl.: G01M 99/00, G05B 23/02

(54) **THRESHOLD VALUE SETTING DEVICE, ABNORMALITY DETERMINATION DEVICE, THRESHOLD VALUE SETTING METHOD, AND ABNORMALITY DETERMINATION METHOD**

(30) Priority: 16.09.2022 JP 2022147958
(71) Applicant: EBARA CORPORATION, Ota-ku, Tokyo 144-8510 (JP)
(72) Inventor: TAMURA, Hiromi, Tokyo 144-8510 (JP); YAMADA, Yasumasa, Tokyo 144-8510 (JP)
(74) Representative: Carstens, Dirk Wilhelm
(86) International application number: PCT/JP2023/030527
(87) International publication number: WO 2024/057864

(57) **Abstract**

A threshold value setting device includes an input unit configured to input a period of data to be extracted from acquired data, a data extraction unit configured to extract the data in the period input by the input unit, a reference value determination unit configured to determine a reference value based on the data extracted by the data extraction unit, and a threshold value calculation unit configured to calculate a threshold value based on the reference value determined by the reference value determination unit.

## Description

### TECHNICAL FIELD

The present invention relates to a threshold value setting device that sets a threshold value for determining an abnormality or the like of an apparatus, an abnormality determination device that determines an abnormality of an apparatus, a threshold value setting method of setting a threshold value for determining an abnormality or the like of an apparatus, and an abnormality determination method of determining an abnormality of an apparatus.

Priority is claimed on Japanese Patent Application No. 2022-147958, filed September 16, 2022, the content of which is incorporated herein by reference.

### BACKGROUND ART

In the related art, an apparatus diagnosis device is disclosed which diagnoses an operating state based on a state amount of a normal state of an apparatus, a state amount of an abnormal state of the apparatus, and a threshold value set in advance between these state amounts, and which is capable of detecting an abnormality and predicting an abnormality time (see Patent Document 1). In addition, an abnormality detection device is disclosed which determines an abnormality of a bearing through comparison with the threshold value (see Patent Document 2).

### Citation List

### Patent Documents

Patent Document 1: Japanese Patent No. 4396286
Patent Document 2: Japanese Patent No. 6942836

### SUMMARY OF INVENTION

### Technical Problem

However, the threshold value used for determining the abnormality of the apparatus is mainly set by a person with reference to the past measurement value or experience of that person in many cases. Therefore, a deviation in abnormality determination may occur depending on the person who sets the threshold value. Setting the threshold value for the abnormality determination requires a lot of information and complicated calculation formulas, and thus the threshold value cannot be easily set, and the abnormality determination cannot be simply performed.

An object of the present invention is to provide a threshold value setting device that sets a threshold value for simply determining an abnormality or the like of an apparatus, an abnormality determination device that determines an abnormality of an apparatus, a threshold value setting method of setting a threshold value for simply determining an abnormality or the like of an apparatus, and an abnormality determination method of determining an abnormality of an apparatus.

### Solution to problem

In order to achieve the above object, there is provided a threshold value setting device according to an aspect of the present invention including an input unit configured to input a period of data to be extracted from acquired data; a data extraction unit configured to extract the data in the period input by the input unit; a reference value determination unit configured to determine a reference value based on the data extracted by the data extraction unit; and a threshold value calculation unit configured to calculate a threshold value based on the reference value determined by the reference value determination unit.

### Advantageous Effects of Invention

According to the threshold value setting device, the abnormality determination device, the threshold value setting method, and the abnormality determination method according to the aspect of the present invention, it is possible to set a threshold value for determining the abnormality or the like of an apparatus simply and quickly, and it is possible to determine the abnormality of the apparatus simply and quickly without complex calculation and a large amount of information.

Problems, configurations, and effects other than those above described will be made clear in a mode for exploiting the invention to be described later.

### BRIEF DESCRIPTION OF DRAWINGS

[FIG. 1] An overall configuration diagram representing an example of an abnormality determination system according to a first embodiment.
[FIG. 2] A diagram explaining abnormality determination according to the present embodiment.
[FIG. 3] A hardware configuration diagram representing an example of a computer.
[FIG. 4] A flowchart representing an example of a threshold value setting method according to the present embodiment.
[FIG. 5] A flowchart representing an example of an abnormality determination method according to the present embodiment.
[FIG. 6A] A diagram representing another example of the apparatus according to the first embodiment.
[FIG. 6B] A diagram representing another example of the apparatus according to the first embodiment.
[FIG. 7] A diagram representing another example of the apparatus according to the first embodiment.
[FIG. 8A] A diagram representing an example of an apparatus according to a second embodiment.
[FIG. 8B] A diagram representing an example of an apparatus according to the second embodiment.

### DESCRIPTION OF EMBODIMENTS

Hereinafter, embodiments for exploiting the present invention are described with reference to the drawings. Hereinafter, a scope required for description to achieve an object of the present invention is schematically shown, and a scope required for description of the corresponding portion of the present invention is mainly described.

### (Description of Overall Configuration)

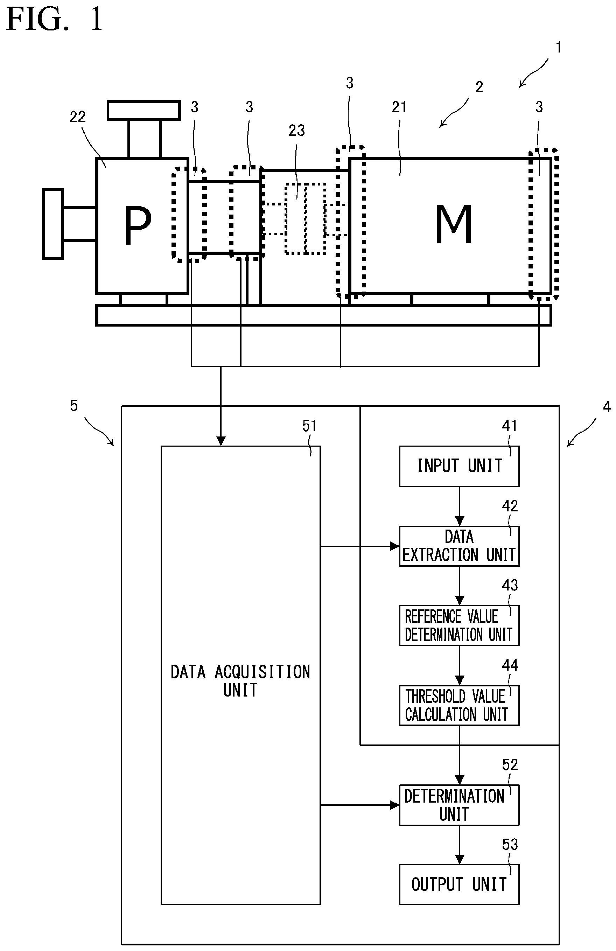

FIG. 1 is an overall configuration diagram showing an example of an abnormality determination system 1 according to a first embodiment.

An abnormality determination system 1 according to a first embodiment includes an apparatus 2 that is a target of abnormality determination, a vibration sensor 3 that measures vibration of the apparatus 2 and outputs vibration data, a threshold value setting device 4 that sets a threshold value for determining abnormality, and an abnormality determination device 5 that determines abnormality of the apparatus 2 by comparing the vibration data measured by the vibration sensor 3 with the threshold value set by the threshold value setting device 4.

The apparatus 2 used in the abnormality determination system 1 as an example of the first embodiment includes a motor 21 that generates a driving force, a pump 22 that is driven by the motor 21, and a transmission unit 23 that transmits the driving force generated by the motor 21 to the pump 22.

The motor 21 is connected to a power source (not shown in the drawings) to be operated. In a case where the motor 21 rotates, the transmission unit 23 transmits a rotational force to the pump 22, and the pump 22 is operated. Vibration is generated from at least one of the motor 21, the pump 22, or the transmission unit 23.

The vibration sensor 3 is installed on, for example, at least one of the motor 21, the pump 22, or the transmission unit 23. The vibration sensor 3 may be of any type of contact type such as a piezoelectric element type, an electromagnetic type, or a capacitance type, or any type of non-contact type such as a laser doppler type. In addition, the vibration sensor 3 may measure any of acceleration, speed, or displacement.

### (Description of Threshold Value Setting)

The threshold value setting device 4 includes an input unit 41 that inputs an extraction period of data, a data extraction unit 42 that extracts data in the extraction period set by the input unit 41, a reference value determination unit 43 that determines a reference value of the data extracted by the data extraction unit 42, and a threshold value calculation unit 44 that calculates a threshold value from the reference value determined by the reference value determination unit 43.

The input unit 41 inputs an extraction period for extracting data from time-series data of vibration measured by the vibration sensor 3 to determine a threshold value. The extraction period of the data may be automatically determined by programming or the like according to the time when the apparatus 2 is operated, and may be set to be input from the input unit 41. **In** addition, the extraction period of the data may be determined in advance.

The data extraction unit 42 extracts the data of the vibration in the extraction period set by the input unit 41. In the present embodiment, the data of the vibration is acquired by a data acquisition unit 51 described later, from the data measured by the vibration sensor 3. The data extraction unit 42 may perform extraction from the vibration data acquired and stored by the data acquisition unit 51.

The reference value determination unit 43 determines the reference value of the data extracted by the data extraction unit 42. The reference value may be a median value, a most frequent value, an average value, or the like of the extracted data. The reference value may be changed depending on the number of pieces of the extracted data. For example, in a case where the number of pieces of extracted data is greater than a predetermined number, the median value may be used, and in a case where the number of pieces of extracted data is less than the predetermined number, the most frequent value may be used. In this way, a statistically stable reference value can be obtained according to the number of pieces of extracted data.

The threshold value calculation unit 44 calculates the threshold value based on the reference value determined by the reference value determination unit 43. **In** the present embodiment, the threshold value calculation unit 44 calculates the threshold value by multiplying the reference value determined by the reference value determination unit 43 by a predetermined coefficient. The threshold value may be calculated by not only multiplying by the reference value but also by performing calculation such as addition and subtraction or a combination of a plurality of calculations. **In** addition, the threshold value may be set to be less than the reference value.

The threshold value calculation unit 44 may calculate two or more threshold values instead of one threshold value. **In** this case, the threshold value calculation unit 44 calculates a first threshold value and a second threshold value that is deviated from the reference value by an amount larger than an amount by which the first threshold value is deviated from the reference value. The threshold value calculation unit 44 may execute at least one calculation of addition, subtraction, or multiplication of an arbitrary coefficient with respect to the reference value to calculate the first threshold value and the second threshold value.

As described above, with the threshold value setting device 4, it is possible to quickly set the threshold value for simply determining the abnormality or the like of the apparatus 2.

### (Description of Abnormality Determination)

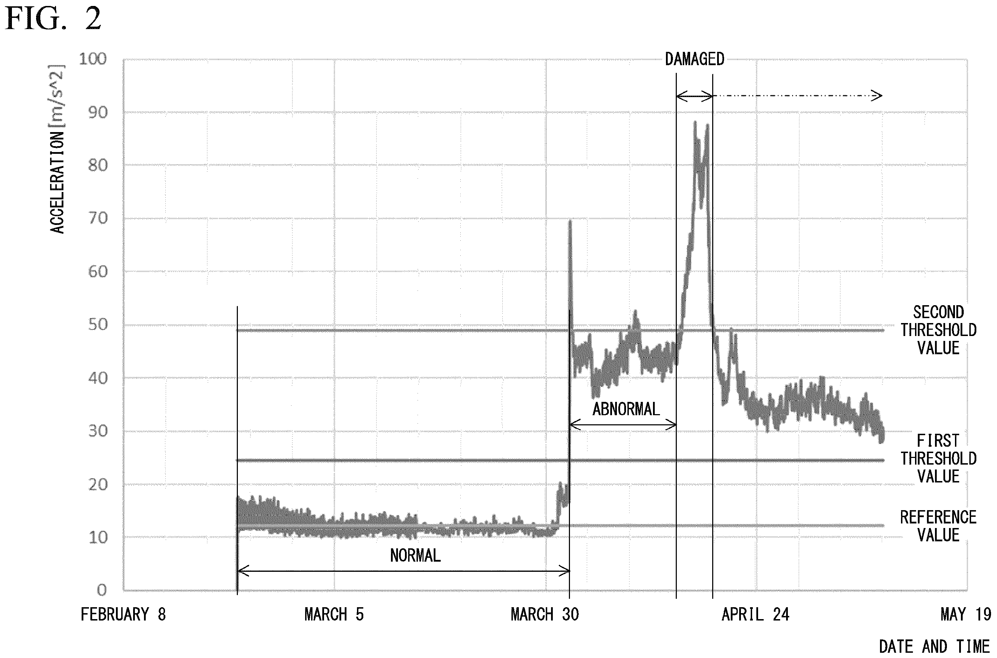

FIG. 2 is a diagram showing abnormality determination according to the present embodiment.

The abnormality determination device 5 includes a data acquisition unit 51 that acquires the vibration data measured by the vibration sensor 3, a determination unit 52 that determines the abnormality of the apparatus 2 by comparing the vibration data acquired by the data acquisition unit 51 with the threshold value set by the threshold value setting device 4, and an output unit 53 that outputs a result determined by the determination unit 52.

The data acquisition unit 51 acquires the vibration data measured by the vibration sensor 3. For example, the data acquisition unit 51 acquires data such as an acceleration of the apparatus 2 as shown in FIG. 2. The data acquisition unit 51 may store the vibration data acquired at least in a predetermined determination period. A storage unit (not shown in the drawings) that stores the vibration data acquired by the data acquisition unit 51 may be additionally included.

The determination unit 52 determines the state of the apparatus 2 by comparing the vibration data acquired by the data acquisition unit 51 with the threshold value set by the threshold value setting device 4. As the vibration data, a value obtained by performing a statistical process, such as a center value, a most frequent value, or an average value of data in a predetermined determination period, in consideration of a temporary error may be used.

For example, as shown in FIG. 2, the determination unit 52 according to the present embodiment determines that the state of the apparatus 2 is "normal" until the vibration data exceeds the first threshold value, and determines that the state of the apparatus 2 is "abnormal" in a case where the vibration data exceeds the first threshold value in a predetermined determination period. In addition, in a case where the vibration data exceeds the second threshold value in the predetermined determination period, the determination unit 52 according to the present embodiment determines that the state of the apparatus 2 is "damaged". Further, after that, even in a case where the vibration data is equal to or less than the second threshold value, the determination unit 52 according to the present embodiment continues to determine that the state of the apparatus 2 is "damaged" as shown by a two-dot chain line in FIG. 2. The determination contents such as "normal", "abnormal", or "damaged" are merely examples, and the determination contents may be appropriately changed to other terms such as "caution" or "warning" depending on a target apparatus or the like.

The determination unit 52 may determine that the state of the apparatus 2 is "abnormal" in a case where the vibration data temporarily exceeds the first threshold value. In addition, the determination unit 52 may determine that the state of the apparatus 2 is "damaged" in a case where the vibration data temporarily exceeds the second threshold value. Further, the determination unit 52 may change the determination of the state of the apparatus 2 from "abnormal" to "normal" in a case where the vibration data is equal to or less than the first threshold value after the state of the apparatus 2 is once determined to be "abnormal". In addition, the determination unit 52 may change the determination of the state of the apparatus 2 from "damaged" to "abnormal" in a case where the vibration data exceeds the first threshold value and is equal to or less than the second threshold value after the state of the apparatus 2 is once determined to be "damaged". In a case where there is one threshold value, even in a case where the vibration data is equal to or less than the first threshold value after the state of the apparatus 2 is determined to be "abnormal", the state of the apparatus 2 may be continued to be determined to be "abnormal".

The output unit 53 outputs the result determined by the determination unit 52. For example, as shown in FIG. 2, the output unit 53 according to the present embodiment outputs the vibration data, the reference value, the threshold value, the determination result, and the like. The output unit 53 may output at least one of the vibration data, the reference value, the threshold value, and the determination result.

In the present embodiment, the apparatus 2 that includes the motor 21 and the pump 22 and generates vibration is used. However, the apparatus 2 is not limited thereto, and may be a refrigerator, a gas machine, various machine tools, a press apparatus, a transport apparatus, a diagnostic apparatus, or the like. In addition, the data acquired for determining the abnormality is not limited to the vibration, and may be rotation speed, the load, the current value, the voltage value, the movement speed, the movement amount, or the like. In this case, the sensor to be used is not the vibration sensor 3, and may be a rotation sensor, a load sensor, an ammeter, a voltmeter, a speedometer, a displacement meter, or the like according to each data.

As described above, with the abnormality determination device 5, it is possible to set the threshold value for quickly determining the abnormality of the apparatus 2 by a simple method, and it is possible to quickly determine the abnormality of the apparatus 2 by a simple method.

### (Hardware Configuration of Each Device)

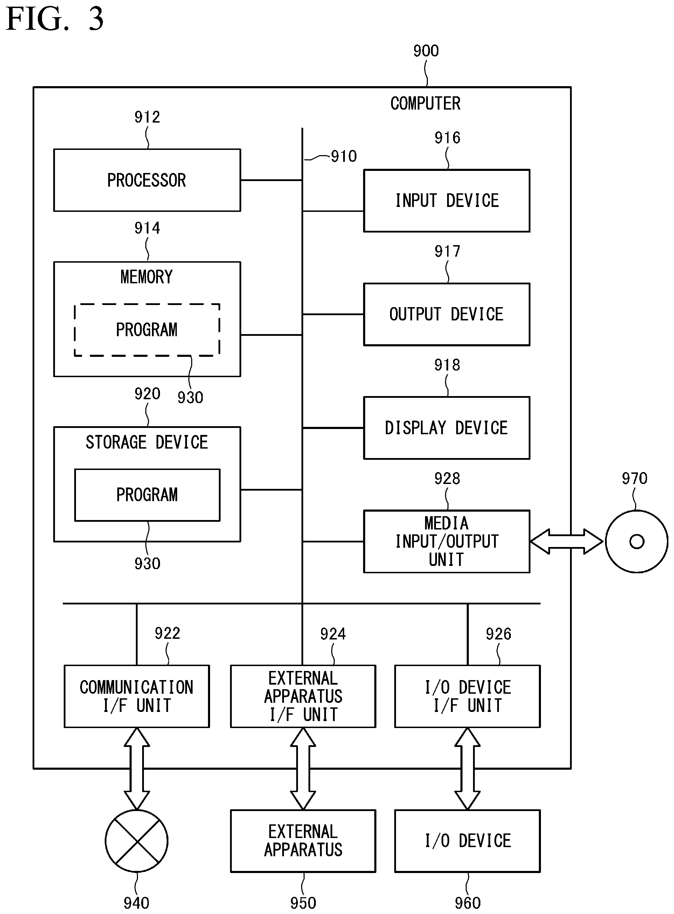

FIG. 3 is a hardware configuration diagram showing an example of the computer 900. The abnormality determination device 5 including the threshold value setting device 4 is configured by a general-purpose or dedicated computer 900.

As shown in FIG. 3, the computer 900 includes, as main components thereof, a bus 910, a processor 912, a memory 914, an input device 916, an output device 917, a display device 918, a storage device 920, a communication interface (I/F) unit 922, an external apparatus I/F unit 924, an input/output (I/O) device I/F unit 926, and a media input/output unit 928. The above-described components may be omitted as appropriate depending on the application for which the computer 900 is used.

The processor 912 is configured of one or a plurality of arithmetic processing units (Central Processing Unit (CPU), a Micro-Processing Unit (MPU), a Digital Signal Processor (DSP), a Graphics Processing Unit (GPU), a Neural Processing Unit (NPU), or the like) and operates as a control unit that manages the entire computer 900. The memory 914 stores various data and a program 930, and is configured as, for example, a volatile memory (a DRAM, an SRAM, or the like) functioning as a main memory, and a non-volatile memory (ROM), a flash memory or the like.

The input device 916 is configured as, for example, a keyboard, a mouse, a numeric keypad, or an electronic pen, and functions as the input unit 41. The output device 917 is configured as, for example, a sound (voice) output device, or a vibration device, and functions as the output unit 53. The display device 918 is configured as, for example, a liquid crystal display, an organic EL display, an electronic paper, or a projector, and functions as the output unit. The input device 916 and the display device 918 may be integrated into one device, such as a touch panel display. The storage device 920 is configured as, for example, an HDD, or an SSD, and functions as a storage unit. The storage device 920 stores various data required for executing an operating system or the program 930.

The communication I/F unit 922 is connected to a network 940 such as the Internet or an intranet in a wired or wireless manner, and functions as a communication unit that transmits and receives data to and from another computer according to a predetermined communication standard. The external apparatus I/F unit 924 is connected to an external apparatus 950 such as a camera, a printer, a scanner, or a reader/writer in a wired or wireless manner, and functions as a communication unit that transmits and receives data to and from the external apparatus 950 according to a predetermined communication standard. The I/O device I/F unit 926 is connected to an I/O device 960 such as one of various sensors or actuators, and functions as a communication unit that transmits and receives various signals and data, such as a detection signal from a sensor or a control signal for an actuator, to and from the I/O device 960. A media input/output unit 928 is configured as, for example, a drive device such as a DVD drive or a CD drive, a memory card slot, or a USB connector, and reads and writes data from and to media (non-transitory storage media) 970 such as a DVD, a CD, a memory card, or a USB memory.

In the computer 900 having the above configuration, the processor 912 loads the program 930 stored in the storage device 920 into the memory 914 and executes the program 930, and controls each unit of the computer 900 via the bus 910. The program 930 may be stored in the memory 914 instead of the storage device 920. The program 930 may be recorded on the media 970 in an installable file format or an executable file format and may be provided to the computer 900 via the media input/output unit 928. The program 930 may be provided to the computer 900 by being downloaded via the communication I/F unit 922 through the network 940. In addition, the computer 900 may implement various functions, that are implemented by the processor 912 executing the program 930, using hardware such as a Field-Programmable Gate Array (FPGA) or an Application Specific Integrated Circuit (ASIC).

For example, the computer 900 is configured as a stationary computer or a portable computer, and is any form of an electronic apparatus. The computer 900 may be a client type computer, a server type computer, or a cloud type computer, or may be, for example, an embedded type computer called a control panel, a controller (including a microcomputer, a programmable logic controller, and a sequencer), or the like. The computer 900 may be applied to a device other than the abnormality determination device 5 including the threshold value setting device 4 according to the present embodiment.

The abnormality determination device 5 including the threshold value setting device 4 according to the present embodiment is configured by each unit of the computer 900. For example, the input unit 41 is configured by the input device 916, the output unit 53 is configured by the output device 917 and the display device 918, the data acquisition unit 51 is configured by a communication I/F unit 922, the external apparatus I/F unit 924, the I/O device I/F unit 926, the memory 914 or the storage device 920, and the data extraction unit 42, the reference value determination unit 43, the threshold value calculation unit 44, and the determination unit 52 are configured by the processor 912.

### (Threshold Value Setting Method)

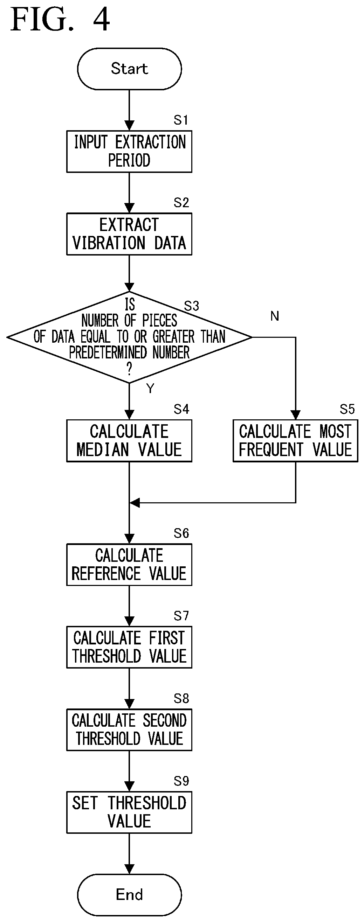

FIG. 4 is a flowchart showing an example of the threshold value setting method according to the present embodiment.

In the threshold value setting method, first, in step 1, the extraction period is input from the input unit 41 (S1). The extraction period according to the present embodiment is set to a period from February 20 to March 5 in the extraction period shown in FIG. 2. Subsequently, in step 2, the data extraction unit 42 extracts the vibration data of the extraction period set by the input unit 41 (S2). Next, in step 3, the reference value determination unit 43 determines whether or not the number of pieces of extracted data is equal to or greater than a predetermined number (S3).

In a case where the number of pieces of data extracted by the reference value determination unit 43 is equal to or greater than a predetermined number in step 3, the reference value determination unit 43 calculates a median value of the data in step 4 (S4). In a case where the number of pieces of data extracted by the reference value determination unit 43 is less than the predetermined number in step 3, in step 5, the reference value determination unit 43 calculates the most frequent value of the data (S5).

Next, in step 6, the reference value determination unit 43 calculates the reference value (S6). In the present embodiment, in a case where the number of pieces of data is equal to or greater than the predetermined number, the median value of the data is used as the reference value, and in a case where the number of pieces of data is less than the predetermined number, the most frequent value of the data is used as the reference value. As shown in FIG. 2, the reference value according to the present embodiment is the acceleration of the median value in the extraction period from February 20 to March 5, which is about 11 m/s².

Next, in step 7, the threshold value calculation unit 44 calculates the first threshold value (S7). The first threshold value according to the present embodiment is calculated by multiplying the reference value by a predetermined coefficient. As shown in FIG. 2, the first threshold value according to the present embodiment is about 23 m/s² obtained by multiplying the reference value of 11 m/s² by a coefficient of 2.1.

Next, in step 8, the threshold value calculation unit 44 calculates the second threshold value (S8). The second threshold value according to the present embodiment is calculated by multiplying the reference value by the predetermined coefficient. As shown in FIG. 2, the second threshold value according to the present embodiment is about 49.5 m/s² obtained by multiplying the reference value of 11 m/s² by a coefficient of 4.5.

Next, in step 9, the threshold value calculation unit 44 sets the threshold value (S9). As shown in FIG. 2, the first threshold value is used for detecting an abnormality, and the second threshold value is used for detecting damage. **In** a case where only the abnormality stage is detected, only the first threshold value may be set, and the second threshold value may not be set. In this case, the calculation of the second threshold value in step 8 may not be executed.

As described above, according to the threshold value setting method according to the present embodiment, it is possible to quickly set the threshold value for simply determining the abnormality or the like of the apparatus 2.

### (Abnormality Determination Method)

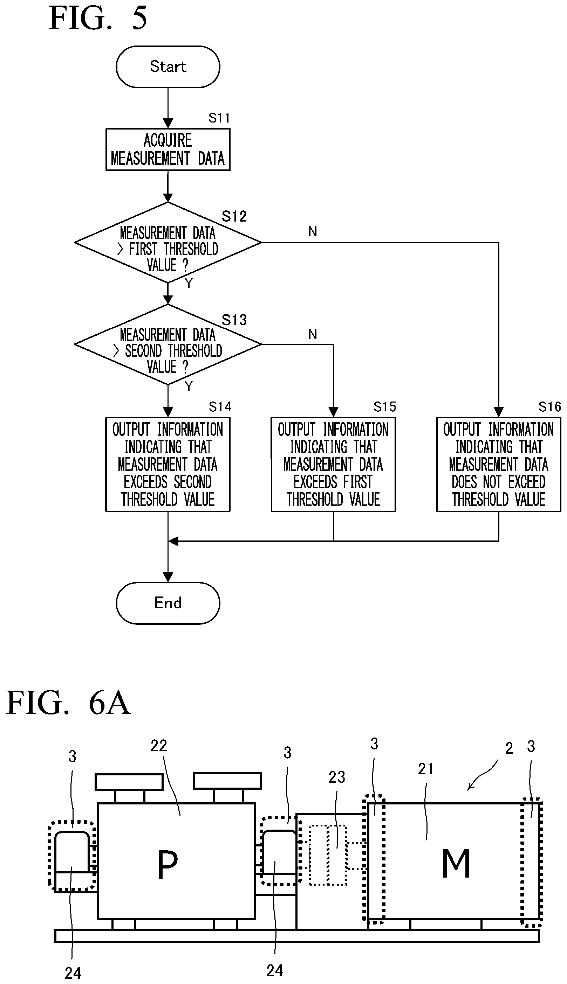

FIG. 5 is a flowchart showing an example of the abnormality determination method according to the present embodiment.

In the abnormality determination method, first, in step 11, the data acquisition unit 51 acquires the measurement data from the vibration sensor 3 (S11). As the measurement data according to the present embodiment, a value obtained by performing statistical process on the average value, the median value, or the most frequent value of time-series data in the predetermined determination period is used in consideration of a temporary error. As the measurement data, a single data that is not subjected to the statistical process may be used.

Next, in step 12, the determination unit 52 determines whether or not the measurement data acquired by the data acquisition unit 51 is greater than the first threshold value (S12). In a case where the measurement data acquired by the data acquisition unit 51 is greater than the first threshold value in step 12, in step 13, the determination unit 52 determines whether or not the measurement data acquired by the data acquisition unit 51 is greater than the second threshold value (S13).

In a case where the measurement data acquired by the data acquisition unit 51 is greater than the second threshold value in step 13, in step 14, the output unit 53 outputs information indicating that the measurement data exceeds the second threshold value, that is, information indicating that the state of the apparatus 2 is determined as "damaged" in the present embodiment (S14). In a case where the measurement data acquired by the data acquisition unit 51 is equal to or less than the second threshold value in step 13, in step 15, the output unit 53 outputs information indicating that the measurement data exceeds the first threshold value, that is, information indicating that the state of the apparatus 2 is determined as "abnormal" in the present embodiment (S15).

In a case where the measurement data acquired by the data acquisition unit 51 is equal to or less than the first threshold value in step 12, in step 16, the output unit 53 outputs information indicating that the measurement data does not exceed the threshold value, that is, information indicating that the state of the apparatus 2 is determined to be "normal" in the present embodiment (S16).

As described above, with the abnormality determination device 5 according to the present embodiment, it is possible to simply and quickly determine the abnormality of the apparatus 2.

### (Other Examples of Apparatus 2 according to First Embodiment)

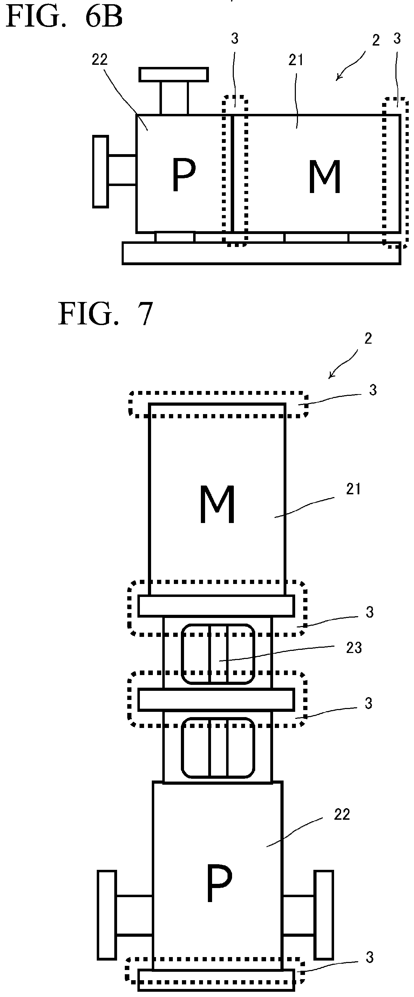

FIGS. 6A and 6B show other examples of the apparatus 2 according to the first embodiment. FIG. 6A shows an example in which the vibration sensor 3 is installed on an accessory 24 of the pump 22. FIG. 6B shows an example in which the vibration sensor 3 is installed on the apparatus 2 in which the motor 21 and the pump 22 are directly connected.

As shown in FIG. 6A, in the abnormality determination system 1 according to the present embodiment, the vibration sensor 3 may be installed on the accessory 24 other than the motor 21, the pump 22, or the transmission unit 23, and the vibration of the accessory 24 may be detected. In addition, as shown in FIG. 6B, in the abnormality determination system 1 according to the present embodiment, the vibration sensor 3 may be installed on the apparatus 2 in which the motor 21 and the pump 22 are directly connected to each other, and the vibration may be detected without using the transmission unit 23.

### (Another Example of Apparatus 2 according to First Embodiment)

FIG. 7 shows another example of the apparatus 2 according to the first embodiment.

As shown in FIG. 7, the abnormality determination system 1 according to the present embodiment may be used for the apparatus 2 in which the motor 21 and the pump 22 are installed in the vertical direction. The motor 21 and the pump 22 may be provided while installing a transmission unit 23 therebetween, or may be directly connected without installing the transmission unit 23.

### (Other Examples of Apparatus 2 according to Second Embodiment)

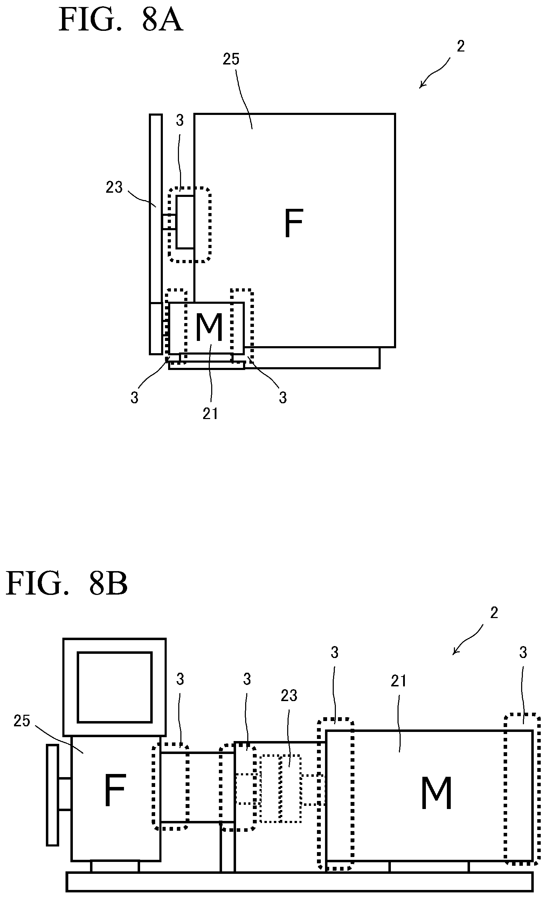

FIGS. 8A and 8B show other examples of the apparatus 2 according to the second embodiment. FIG. 8A shows an example in which the vibration sensor 3 is installed on the apparatus 2 that transmits the driving force of the motor 21 to the fan 25. FIG. 8B shows an example in which the vibration sensor 3 is installed on the apparatus 2 that transmits the driving force of the motor 21 to the fan 25 on the same axis.

As shown in FIGS. 8A and 8B, the abnormality determination system 1 according to the present embodiment may use the apparatus 2 including the motor 21 that generates the driving force, the fan 25 that is driven by the motor 21, and the transmission unit 23 that transmits the driving force generated by the motor 21 to the fan 25.

In the apparatus 2 shown in FIG. 8A, the motor 21 and the fan 25 rotate around different axes, and a transmission unit 23, such as a belt or a gear, transmits the driving force. **In** the apparatus 2 shown in FIG. 8B, the motor 21 and the fan 25 may rotate on the same axis, and the transmission unit 23, such as a coupling, a connector, or a joint, may transmit the driving force.

As described above, the threshold value setting device 4 and the abnormality determination device 5 according to the present embodiment can be used for various types of apparatuses 2. For example, although not shown in the drawings, the apparatus 2 can be used for a refrigerator, a gas machine, various machine tools, a press apparatus, a transport apparatus, a diagnostic apparatus, and the like. **In** addition, the data acquired for setting the threshold value and determining the abnormality is not limited to the vibration, and may be a rotation speed, a load, a current value, a voltage value, a movement speed, a movement amount, or the like. In this case, the sensor to be used is not the vibration sensor 3, and may be a rotation sensor, a load sensor, an ammeter, a voltmeter, a speedometer, a displacement meter, or the like according to each data.

The present invention is not limited to the above-described embodiments, and can be exploited with various modifications without departing from the scope of the present invention. Then, all the modifications are included in the technical concept of the present invention.

### REFERENCE SIGNS LIST

1 Abnormality determination system
2 Apparatus
21 Motor
22 Pump
23 Transmission unit
24 Accessory
25 Fan
3 Vibration sensor
4 Threshold value setting device
41 Input unit
42 Data extraction unit
43 Reference value determination unit
44 Threshold value calculation unit
5 Abnormality determination device
51 Data acquisition unit
52 Determination unit
53 Output unit

## Claims

1. A threshold value setting device comprising:
an input unit configured to input a period of data to be extracted from acquired data;
a data extraction unit configured to extract the data in the period input by the input unit;
a reference value determination unit configured to determine a reference value based on the data extracted by the data extraction unit; and
a threshold value calculation unit configured to calculate a threshold value based on the reference value determined by the reference value determination unit.

2. The threshold value setting device according to Claim 1,
wherein the reference value determination unit determines a most frequent value or a median value of the data extracted by the data extraction unit as the reference value.

3. The threshold value setting device according to Claim 2,
wherein the reference value determination unit
uses the median value of the data in a case where the number of pieces of data extracted by the data extraction unit is equal to or greater than a predetermined number, and
uses the most frequent value of the data in a case where the number of pieces of data extracted by the data extraction unit is less than the predetermined number.

4. The threshold value setting device according to Claim 1,
wherein the threshold value calculation unit calculates the threshold value by executing at least one calculation of addition, subtraction, or multiplication of an arbitrary coefficient with respect to the reference value.

5. The threshold value setting device according to Claim 4,
wherein the threshold value is less than the reference value.

6. The threshold value setting device according to Claim 1,
wherein the threshold value calculation unit calculates a first threshold value and a second threshold value that is deviated from the reference value by an amount larger than an amount by which the first threshold value is deviated from the reference value.

7. The threshold value setting device according to Claim 6,
wherein the threshold value calculation unit calculates the first threshold value and the second threshold value by executing at least one calculation of addition, subtraction, or multiplication of an arbitrary coefficient with respect to the reference value.

8. An abnormality determination device comprising:
the threshold value setting device according to any one of Claims 1 to 7;
a data acquisition unit configured to acquire data of an apparatus, the data being extracted by the extraction unit;
a determination unit configured to determine a state of the apparatus by comparing the data acquired by the data acquisition unit with the threshold value set by the threshold value setting device; and
an output unit configured to output a result determined by the determination unit.

9. A threshold value setting method comprising:
a step of inputting a period of data to be extracted from acquired data;
a step of extracting the data in the input period from the acquired data;
a step of determining a reference value from the extracted data in the period; and
a step of calculating a threshold value from the determined reference value.

10. The threshold value setting method according to Claim 9,
wherein, in the step of determining the reference value, a most frequent value or a median value of the extracted data in the period is determined as the reference value.

11. The threshold value setting method according to Claim 10,
wherein, in the step of determining the reference value,
the median value of the data is used in a case where the number of pieces of data extracted by the data extraction unit is equal to or greater than a predetermined number, and
the most frequent value of the data is used in a case where the number of pieces of data extracted by the data extraction unit is less than the predetermined number.

12. The threshold value setting method according to Claim 9,
wherein the threshold value is calculated by executing at least one calculation of addition, subtraction, or multiplication of an arbitrary coefficient with respect to the reference value.

13. The threshold value setting method according to Claim 12,
wherein the threshold value is less than the reference value.

14. The threshold value setting method according to Claim 9,
wherein, as the threshold value, a first threshold value and a second threshold value that is deviated further from the reference value than the first threshold value are calculated.

15. The threshold value setting method according to Claim 14,
wherein the first threshold value and the second threshold value are calculated by executing at least one calculation of addition, subtraction, or multiplication of an arbitrary coefficient with respect to the reference value.

16. An abnormality determination method comprising:
the threshold value setting method according to any one of Claims 9 to 15;
a step of acquiring data of an apparatus;
a step of determining a state of the apparatus by comparing the data with the threshold value set by the threshold value setting method; and
a step of outputting a determination result.
